(19) **Europäisches Patentamt / European Patent Office / Office européen des brevets**

(11) **EP 4 675 667 A1**

(12) **EUROPEAN PATENT APPLICATION**
published in accordance with Art. 153(4) EPC

(43) Date of publication:
07.01.2026 Bulletin 2026/02

(21) Application number: 24763961.0

(22) Date of filing: 28.02.2024

(51) International Patent Classification (IPC):
*H01J 1/308* (2006.01)  *B82Y 30/00* (2011.01)
*H01J 37/06* (2006.01)  *H01J 37/073* (2006.01)

(52) Cooperative Patent Classification (CPC):
B82Y 30/00; H01J 1/308; H01J 37/06; H01J 37/073

(86) International application number:
PCT/JP2024/007218

(87) International publication number:
WO 2024/181482 (06.09.2024 Gazette 2024/36)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 02.03.2023 JP 2023031624

(71) Applicant: NATIONAL INSTITUTE OF ADVANCED INDUSTRIAL
SCIENCE AND TECHNOLOGY
Chiyoda-ku
Tokyo 100-8921 (JP)

(72) Inventors:
• MURAKAMI, Katsuhisa
Tsukuba-shi, Ibaraki 305-8560 (JP)
• NAGAO, Masayoshi
Tsukuba-shi, Ibaraki 305-8560 (JP)

(74) Representative: Müller-Boré & Partner
Patentanwälte PartG mbB
Friedenheimer Brücke 21
80639 München (DE)

(54) **ELECTRON SOURCE**

(57) A disclosed electron source includes: (A) a graphene layer having an electron emission area on a surface of the graphene layer; and (B) a p-type semiconductor layer that is in direct contact with the graphene layer and forms a Schottky junction with the graphene layer. In this way, the electrons are accelerated in the depletion layer in the p-type semiconductor layer. Moreover, unlike the MIS type electron source, since the electrons are not accelerated in the insulator layer, the dielectric breakdown caused by a large number of electrons travelling in the valence band of the insulator does not occur, and a long lifespan electron source can be realized. Note that the aforementioned p-type semiconductor layer preferably has a depletion layer having a width of 2.91 nm or more and 30 nm or less.

FIG.3

EP 4 675 667 A1

**Description**

Technical Field

The present invention relates to a planar electron source.

Background Art

As an electron source (also referred to as an electron-emitting element) that emits electrons into a vacuum, gas, or liquid, planar electron sources having an MIS (Metal/Insulator/Semiconductor) structure and a MIM (Metal/Insulator/Metal) structure are disclosed, for example, in Patent Documents 1 to 3.

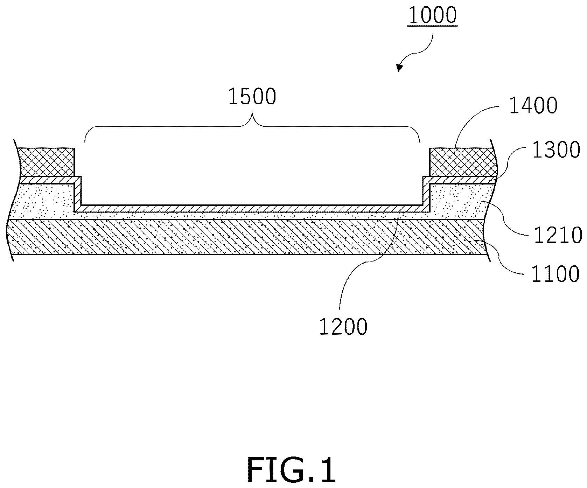

FIG. 1 illustrates a cross-sectional view schematically illustrating a configuration example of an electron-emitting element. The electron-emitting element 1000 includes a lower electrode substrate 1100, an insulator layer 1200, and an electron-transmitting electrode layer 1300. Conventionally, precious metals such as Au, Pt, and Ir, which have low reactivity, have been used as the material for the electron-transmitting electrode layer 1300. The insulator layer 1200 is formed so that a portion thereof has a thickness of 5 nm to 20 nm, and functions as an electron emission surface 1500. The insulator layer 1210 in the portion other than the electron emission surface is usually formed thicker than the electron emission surface 1500, and has a thickness of approximately several tens to several hundreds of nm. An upper electrode layer 1400 for applying a voltage is formed on the portion of the electron-transmitting electrode layer 1300 that does not overlap with the electron emission surface 1500.

In case where such an electron-emitting element 1000 is used, when a voltage of approximately 5 V to 20 V is applied between the lower electrode substrate 1100 and the upper electrode layer 1400, the potential barrier formed in the insulator layer 1200 becomes thinner, and the electrons in the lower electrode substrate 1100 tunnel into the conduction band of the insulator layer 1200 by the quantum mechanical tunnelling effect. Electrons that have entered the conduction band of the insulator layer 1200 lose part of their energy due to scattering by lattice vibrations. However, electrons with energy higher than the work function of the electron-transmitting electrode layer 1300 pass through the electron-transmitting electrode layer 1300 and are emitted into a vacuum.

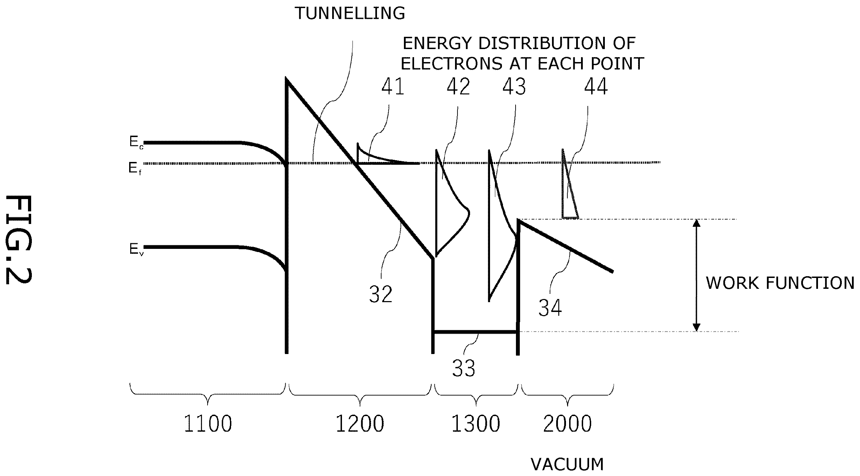

It is known that the operating principle of a thin-film electron source, such as the electron-emitting element 1000, can be explained using an energy band diagram (see, for example, Patent Document 2). FIG. 2 is an energy band diagram of a state in which a voltage is applied to the upper electrode layer 1400 in a structure in which the lower electrode substrate 1100, the insulator layer 1200 functioning as an electron acceleration layer, and the upper electrode layer 1300 are stacked. An electric field 32 is generated in the insulator layer 1200 by the voltage applied between the upper electrode and the lower electrode. This electric field 32 causes electrons to flow from the lower electrode substrate 1100 into the insulator layer 1200 by the tunnelling phenomenon. The energy distribution of the electrons immediately after tunnelling corresponds to a distribution 41 illustrated in the figure. These electrons are accelerated by the electric field 32 in the insulator layer 1200, and some of them lose energy through interaction with atoms in the insulator layer 1200, becoming hot electrons as indicated by an energy distribution 42. When these hot electrons pass through the upper electrode layer 1300, some of the electrons further lose energy due to inelastic scattering or the like, resulting in a broadened energy distribution as depicted by a distribution 43. When they reach the interface between the upper electrode layer 1300 and the vacuum 2000, that is, the surface of the upper electrode layer 1300, electrons with energy smaller than the work function of the surface remain in the upper electrode layer 1300, but electrons with energy higher than the work function, that is, electrons included in the distribution 44, are emitted into a vacuum 2000. In addition, FIG. 2 also illustrates the energy level 33 of the upper electrode layer 1300 and the vacuum level 34, in which $E_c$ represents the conduction band, Ef represents the Fermi level, and $E_v$ represents the valence band.

Under such backgrounds, for example, Patent Document 4 discloses an electron-emitting element that uses graphene in the upper electrode layer 1300 to enable highly efficient electron emission. Specifically, one layer of graphene or several layers of graphite is used as the material for the electron-transmitting electrode layer 1300. By using carbon that is a light element, as the electron-transmitting electrode, it is possible to prevent the energy distribution from spreading from the distribution 42 to the distribution 43 in FIG. 2, thereby increasing the number of electrons exceeding the work function, and achieving highefficiency electron emission and large current.

However, such an electron source that emits electrons by tunnelling through a solid has a problem of a short lifespan. This is because the electrons travel through the insulator layer, which is the electron acceleration layer, causing the dielectric strength to deteriorate and the leakage current to increase gradually.

By the way, as a planar electron source, a Schottky junction element method is known, in which a semiconductor layer that forms a Schottky junction with the upper electrode is sandwiched between the upper and lower electrodes, and hot electrons are generated via avalanche breakdown caused by a high electric field (for example, Patent Document 5). Electron sources employing such a Schottky junction element method are also disclosed in Patent Documents 6 and 7, for example. However, the preferred material choices and Schottky junction configurations to be adopted as the electron source remain unclear.

Prior Technical Documents

Patent Document

Patent Document 1: Patent Laid-Open No. 2010-244735
Patent Document 2: Patent Laid-Open No. 2003-162956
Patent Document 3: Patent Laid-Open No. 2001-23511
Patent Document 4: Patent Laid-Open No. 2017-45639
Patent Document 5: Patent Laid-Open No. H10-241553
Patent Document 6: Patent No. 2721278
Patent Document 7: Patent Laid-Open No. H3-129633

Summary of the Invention

Problems to be solved by the Invention

Therefore, as one aspect, an object of the present invention is to provide a new electron source having a long life.

Means for solving the problems

An electron source according to the present invention includes: (A) a graphene layer having an electron emission area on a surface of the graphene layer; and (B) a p-type semiconductor layer that is in direct contact with the graphene layer and forms a Schottky junction with the graphene layer.

[Brief Description of Drawings]

[FIG. 1] FIG. 1 is a diagram illustrating a configuration example of a conventional electron source;
[FIG. 2] FIG. 2 is a diagram illustrating an energy distribution of the conventional electron source;
[FIG. 3] FIG. 3 is a diagram illustrating a schematic cross-section of an electron source according to a first embodiment;
[FIG. 4] FIG. 4 is a diagram illustrating an energy distribution according to the first embodiment;
[FIG. 5] FIG. 5 is a diagram illustrating the dependence of a depletion layer width and emission current on an applied voltage for a certain sample;
[FIG. 6] FIG. 6 is a diagram illustrating the dependence of the depletion layer width and emission current on an applied voltage for another sample;
[FIG. 7] FIG. 7(a) illustrates the lifespan according to the embodiment, and FIG. 7(b) illustrates the lifespan of the conventional technology;
[FIG. 8] FIG. 8 is a diagram illustrating the manufacturing process for the electron source according to the first embodiment;
[FIG. 9] FIG. 9(a) illustrates a schematic cross-section of an electron source according to a second embodiment, and FIG. 9(b) illustrates its energy distribution;
[FIG. 10] FIG. 10 is a schematic cross-section of an electron source according to a third embodiment, and FIG. 10(b) illustrates its energy distribution; and
[FIG. 11] FIG. 11 is a diagram illustrating an application example of the electron source according to the third embodiment.

Description of Embodiments

[First Embodiment]

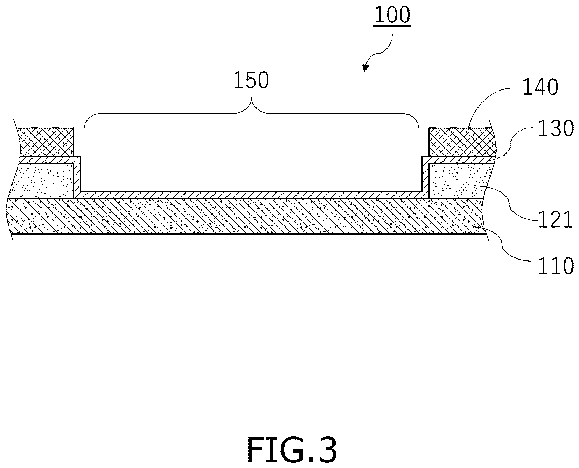

FIG. 3 illustrates a cross-sectional view of an electron source according to the present embodiment. An electron-emitting element 100 according to the present embodiment includes a lower electrode substrate 110, which is a p-type semiconductor, and a graphene layer 130. A portion that is in direct contact with the lower electrode substrate 110 and forms a Schottky junction functions as an electron emission area 150. In the portion other than the electron emission area 150, an insulator layer 121 is provided between the lower electrode substrate 110 and the graphene layer 130, and a contact electrode 140 is provided on the graphene layer 130.

The p-type semiconductor is, for example, p-Si, and the thickness of the lower electrode substrate 110 is not particularly limited. The insulator layer 121 is, for example, $SiO_2$, $Al_2O_3$, $TiO_2$, or the like. The contact electrode 140 is, for example, Ti or Ni. The graphene layer 130 is preferably 1 or more and 10 or less graphene layers, more preferably 1 or more and 3 or less graphene layers. The thickness of a single graphene layer is 0.355 nm.

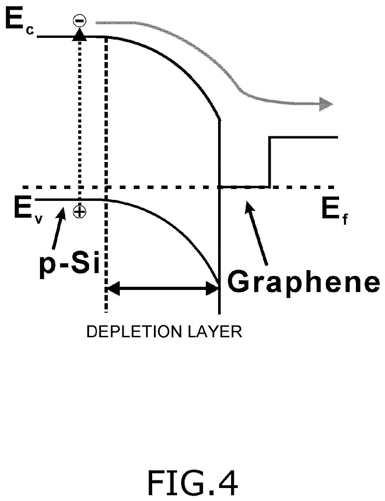

In this way, no insulator layer is provided between the graphene layer 130 and the lower electrode substrate 110, which is a p-type semiconductor, and the graphene layer 130 and the lower electrode substrate 110 are in direct contact with each other to form a Schottky junction. As schematically illustrated in FIG. 4, when a positive voltage is applied to the contact electrode 140 provided on the graphene layer 130, electrons present in the conduction band ($E_c$) on the surface of p-Si, which is a p-type semiconductor, flow into the graphene layer 130, and a depletion layer is formed on the surface of the p-type semiconductor (for example, p-Si). When electrons excited from the valence band ($E_v$) to the conduction band ($E_c$) by heat or light enter the formed depletion layer, the electrons are accelerated by the internal electric field and reach the surface of the p-type semiconductor (for example, p-Si). Some electrons flow into the graphene layer 130, but because the graphene layer 130 is formed very thin, approximately one atomic layer to several atomic layers, some electrons travel through the graphene layer 130 and are emitted into a vacuum.

In this electron source 100, electrons are accelerated in the depletion layer. Unlike the MIS-type electron source, electrons are not accelerated in the insulator layer. Since no dielectric breakdown occurs, which would otherwise result from a large number of electrons traveling through the valence band of the insulator, a longlifespan electron source can be realized.

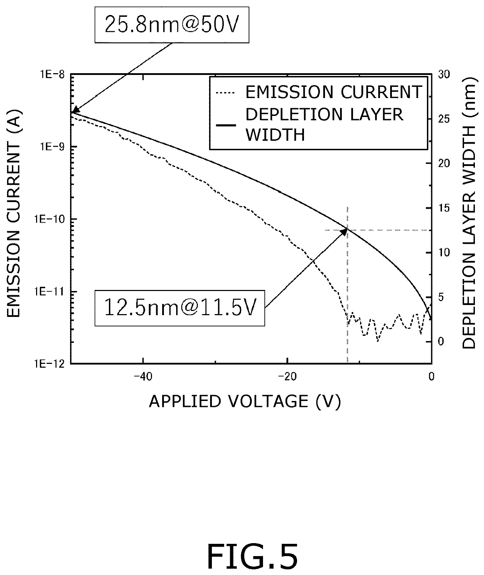

The width of the depletion layer formed in the p-type semiconductor for electron emission is important. FIG. 5 is a diagram illustrating the dependence of the depletion layer width and emission current on the applied voltage for a sample in which the p-type semiconductor is p-Si and the doping level is $1 \times 10^{20}$ cm$^{-3}$. In the example of FIG. 5, the horizontal axis represents the applied voltage [V], and the vertical axis represents the emission current [A] and the corresponding depletion layer width [nm]. In this sample, as represented by the dotted line, electron emission begins at an applied voltage of 11.5 V, and the emission current increases up to 50 V.

The depletion layer width W [m] has the following relationship with the applied voltage V and carrier density $N_D$ [m$^{-3}$].

[Math 1]

$$W = \sqrt{\frac{2\varepsilon\varepsilon_0(V_D - V)}{qN_D}} \qquad (1)$$

Here, $\varepsilon$ represents the dielectric constant of the p-type semiconductor, $\varepsilon_0$ represents the dielectric constant of a vacuum, $V_D$ represents the built-in potential, and q represents the elementary charge.

From Equation (1), as represented by the solid line in FIG. 5, in this sample, the depletion layer width at an applied voltage V = 11.5 V at which electron emission begins is 12.5 nm, and the depletion layer width at an applied voltage V = 50 V is 25.8 nm.

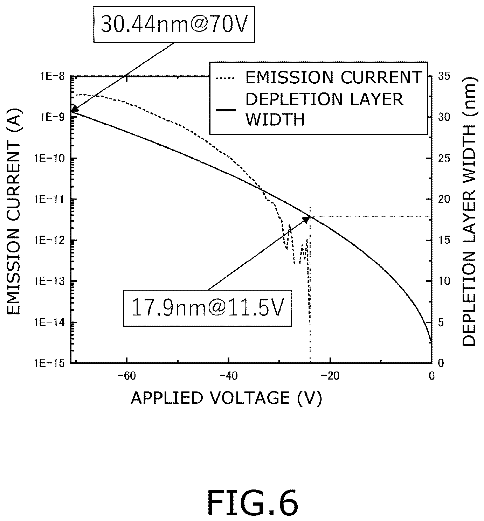

Meanwhile, FIG. 6 illustrates the dependence of the depletion layer width and emission current on the applied voltage for another sample with a similar doping level. In this sample, as represented by the dotted line, electron emission begins at an applied voltage of 11.5 V, and the emission current increases up to 70 V. In this sample, from Equation (1), the depletion layer width at the applied voltage V = 11.5 V at which electron emission begins is 17.9 nm, and the depletion layer width at the applied voltage V = 70 V is 30.44 nm.

From such experimental data, it can be seen that electron emission is possible up to a depletion layer width of 30 nm. On the other hand, in order to emit electrons, a voltage equal to or greater than the work function of the electrode is applied. Since the work function of a general electrode material is around 5 eV, an applied voltage of approximately 6 V is required to emit electrons. On the other hand, in the case of Si, the doping level is at most $10^{21}$ cm$^{-3}$. Thus, when a reverse bias of 6 V is applied to a Schottky junction with p-Si at such a doping level, the depletion layer width is calculated to be 2.91 nm. From the above, for the purpose of electron emission, it is preferable to form a depletion layer having a width of 2.91 nm or more and 30 nm or less.

However, the shorter the distance that electrons travel in the depletion layer width, the less the energy loss due to electron scattering in the depletion layer and the recombination with holes, and the higher the energy monochromaticity and emission current density of the emitted electrons can be achieved. A preferable range is 3.1 nm or more and 30 nm or less, a more preferable range for increasing the emission current density is 3.1 nm or more and 20 nm or less, and a further preferable range for energy monochromaticity of the emitted electrons is 3.1 nm or more and 10 nm or less, which allows the electrons to be accelerated in the depletion layer with almost no scattering based on the mean free path of the electrons.

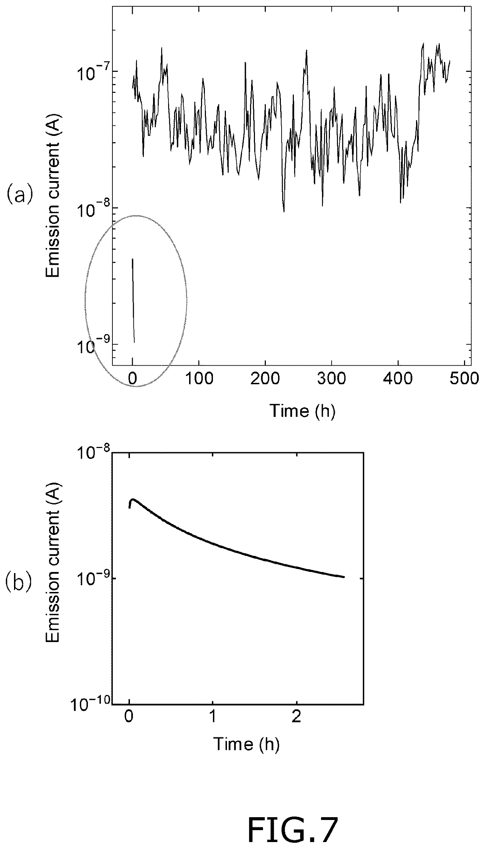

Experimental results for extending the lifespan of the electron source 100 are illustrated in FIGS. 7(a) and 7(b). In FIGS. 7(a) and 7(b), the horizontal axis represents time [h] and the vertical axis represents the emission current [A]. In FIG. 7 (a) the line on the upper side illustrating that the emission current flows for approximately 500 hours (specifically, 497 hours) represents an experimental example of the electron source 100 according to the present embodiment, and the line on the lower side that ends approximately at 0 hours represents an experimental example of the electron source having the structure illustrated in Patent Document 4. FIG. 7(b) is an enlarged view of the circled portion in FIG. 7(a), and the electron emission decays to $10^{-9}$ [A] in approximately 2 hours. As described above, it can be seen that the electron source 100 according to the present embodiment has a dramatically longer lifespan and emits a large number of electrons.

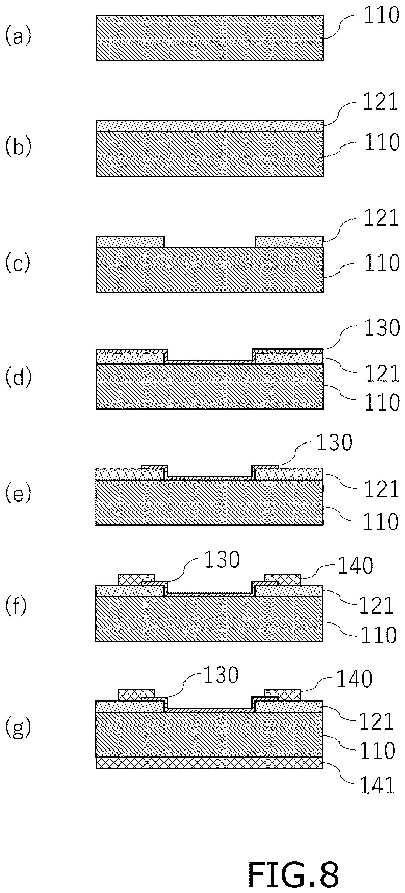

Next, a method for manufacturing the electron source 100 according to the present embodiment (when p-Si is used as a p-type semiconductor) will be briefly described with reference to FIG. 8. As illustrated in FIG. 8(a), the p-Si substrate is cleaned. Then, as illustrated in FIG. 8(b), a thermal oxide film ($SiO_2$) is formed to a thickness of 300 nm. Thereafter, as illustrated in FIG. 8(c), the oxide film of the electron emission area 150 is removed by lithography and buffered hydrofluoric acid (BHF) wet etching. The electron emission area 150 has a size of, for example, 10 $\mu$m × 10 $\mu$m.

Then, as illustrated in FIG. 8(d), the graphene layer 130 is formed by plasma chemical vapor deposition (plasma CVD). The conditions of the plasma CVD are, for example, 800°C, 18 Pa, 2 W, Ar: 20 sccm, $CH_4$: 0.5 sccm, and a deposition time of 60 minutes. Thereafter, as illustrated in FIG. 8(e), the graphene layer 130 is patterned into a desired shape by lithography and oxygen plasma etching (100 W, 10 minutes).

Then, as illustrated in FIG. 8(f), the contact electrode 140 is formed into a desired shape by lithography, electron beam evaporation, and a lift-off process. Although not illustrated in FIG. 3, a back contact electrode 141 (for example, Ni or Ti) is formed on the back surface of the p-Si substrate by electron beam evaporation.

When such p-Si is used as a p-type semiconductor, since the electrons in the valence band are excited into the conduction band by thermal excitation, the electron source can operate without light irradiation.

On the other hand, when a material other than p-Si is used, electrons may be emitted by light irradiation. Therefore, a material is selected according to the wavelength of the light to be irradiated. This is because p-type semiconductors basically absorb light with a wavelength equal to or greater than the band gap to generate electronhole pairs. Specifically, the relationship between the wavelength of the irradiated light and the material to be used is as follows:

- Far infrared light (4 $\mu$m or more (0.31 eV or less)):
  InSb (0.17 eV)
- Mid-infrared light (2.5 $\mu$m or more and less than 4 $\mu$m (more than 0.31 eV and 0.496 eV or less))
  InAs (0.36 eV)
- Near-infrared light (0.7 $\mu$m or more and less than 2.5 $\mu$m (more than 0.496 eV and 1.77 eV or less))
  Ge (0.67 eV), Si (1.11 eV), InP (1.34 eV), GaAs (1.43 eV), $MoS_2$ (bulk) (1.2 eV), $WS_2$ (bulk) (1.2 eV)
- Visible light (380 nm or more and less than 700 nm (more than 1.77 eV and 3.26 eV or less))
  SiC (2.8-3.2 eV), GaP (2.25 eV), ZnO (3.2 eV), ZnSe (2.58 eV), $MoS_2$ (single layer) (2.8 eV), $WS_2$ (single layer) (2 eV)
- Ultraviolet light (less than 380 nm (more than 3.26 eV)) GaN (3.4 eV), $GaO_3$ (4.7-4.9 eV), diamond (5.47 eV), h-BN (6 eV), c-BN (6.12 eV), AlN (6.2 eV)

[Second Embodiment]

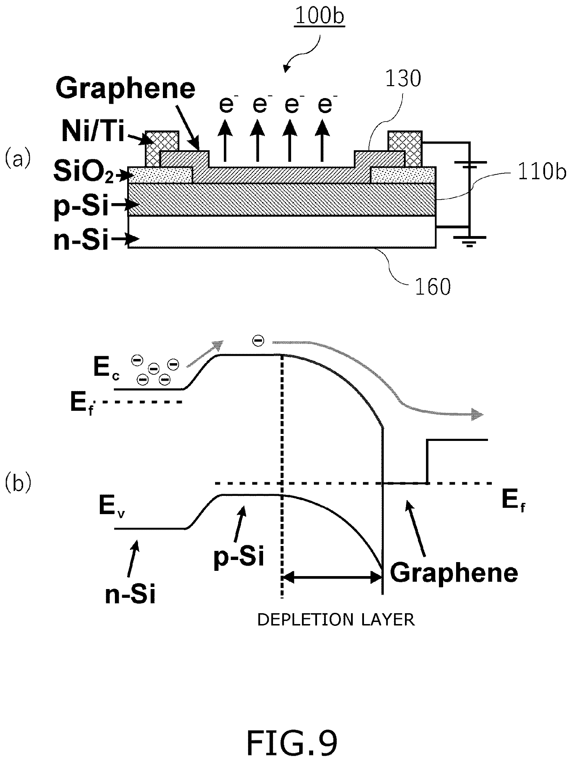

In the present embodiment, as illustrated in the schematic cross-sectional view of FIG. 9(a), an electron source 100b has a p-type semiconductor layer 110b, for example, p-Si, a graphene layer 130 that forms a Schottky junction with the p-type semiconductor layer 110b and is in direct contact with the p-type semiconductor layer 110b, and a lower substrate 160 of an n-type semiconductor (for example, n-Si) that is in contact with the surface of the p-type semiconductor layer 110b, which is opposite to the graphene layer 130. The contact electrodes and the insulator layer are the same as those in the first embodiment, and therefore will not be described.

As illustrated in FIG. 9(a), when a negative voltage is applied to the lower substrate 160 and a positive voltage is applied to the graphene layer 130 to emit electrons from the electron emission area of the graphene layer 130, a forward bias is applied to the pn junction of p-Si and n-Si. Then, as illustrated in FIG. 9(b), electrons in the conduction band ($E_c$) of the n-type semiconductor (for example, n-Si) diffuse into the conduction band of the p-type semiconductor (for example, p-Si). In this way, by adding the lower substrate 160 of the n-type semiconductor as in the present embodiment, electrons are supplied from the n-type semiconductor, and electrons can be emitted without light irradiation.

The thickness of the lower substrate 160 made of the n-type semiconductor is not particularly limited. However, the thickness of the p-type semiconductor layer 110b is preferably thin, since it is better that carriers diffused from the lower substrate 160 made of the n-type semiconductor do not recombine in the p-type semiconductor. On the other hand, since the depletion layer should be formed in the same manner as in the first embodiment, it is preferable that the p-type semiconductor layer 110b has a thickness at least equal to the width of the depletion layer.

[Third Embodiment]

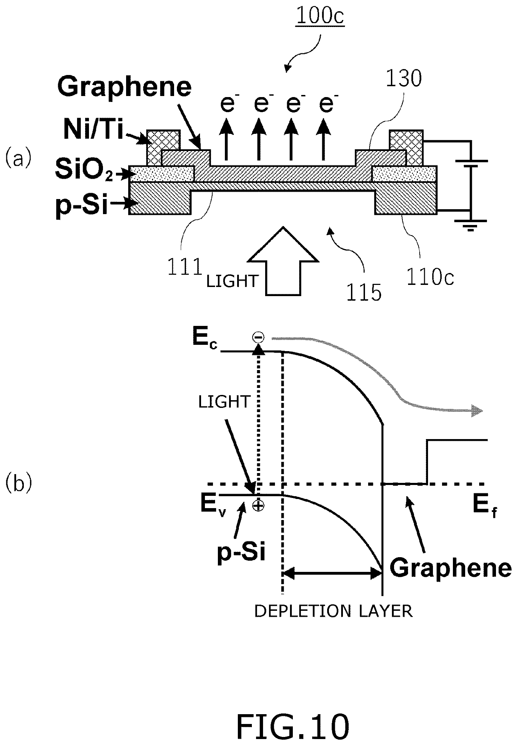

In the present embodiment, as illustrated in FIG. 10(a), for example, an electron source 100c has a lower substrate 110c made of a p-type semiconductor, for example, p-Si, and a graphene layer 130 that forms a Schottky junction with the lower substrate 110c and is in direct contact with the lower substrate 110c. Note that the contact electrodes and the insulator layer are the same as those in the first embodiment, and therefore will not be described. In the present embodiment, a recess 115 is formed on the surface of the lower substrate 110c, which is opposite to the graphene layer 130. The recess 115 is formed so as to at least overlap with the electron emission area of the graphene layer 130. That is, the recess 115 is formed in such a manner that it either coincides with or encompasses the electron emission area. As a result, due to the recess 115 provided in the lower substrate 110c, a membrane structure is formed by the p-type semiconductor layer 111 and the graphene layer 130. The recess 115 is irradiated with light to emit electrons.

For example, since the p-type semiconductor layer 111 in the recess 115 absorbs light, if the p-type semiconductor layer 111 is p-Si, the thickness is approximately 2.5 $\mu$m to 100 nm when light from visible light (600 nm) to ultraviolet light (400 nm) is used. On the other hand, when the emitted electrons are used for lithography as described later, ultraviolet light is used, so a thickness of 100 nm to 200 nm is preferable. On the other hand, if infrared light is used, a thickness of approximately 2.5 $\mu$m to 3 $\mu$m is preferable.

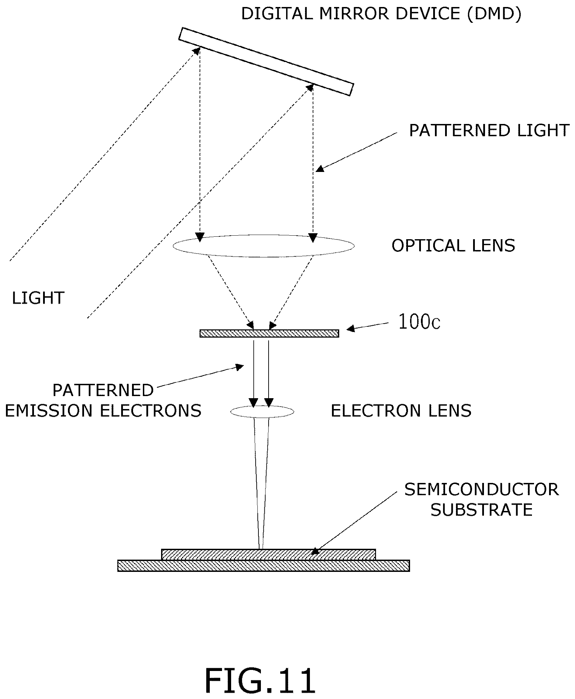

Such an electron source 100c can be used in an electron beam exposure apparatus. In this case, for example, as illustrated in FIG. 11, a digital mirror device (DMD) and an optical lens are provided, and the electron source 100c is provided between the electron lens and the semiconductor substrate to be exposed. The back surface of the electron source 100c (that is, the opposite side to the electron emission area) is oriented toward the optical lens side.

In this manner, a circuit layout pattern is converted into a light irradiation pattern using a digital mirror device, and the light is irradiated onto the back surface of the electron source 100c. In this way, when the electron source 100c emits electrons corresponding to the light irradiation pattern from a surface, and the emitted electrons are reduced by the electron lens, a fine circuit layout can be exposed all at once. Conventionally, since a single electron beam was used for drawing, the throughput was poor. However, since this method allows for a surface to be exposed all at once, the throughput can be expected to improve.

The aforementioned embodiments are summarized as follows:
An electron source according to the present embodiments invention includes: (A) a graphene layer having an electron emission area on a surface of the graphene layer; and (B) a p-type semiconductor layer that is in direct contact with the graphene layer and forms a Schottky junction with the graphene layer.

In this way, the electrons are accelerated in the depletion layer in the p-type semiconductor layer. Moreover, unlike the MIS type electron source, since the electrons are not accelerated in the insulator layer, the dielectric breakdown caused by a large number of electrons travelling in the valence band of the insulator does not occur, and a long lifespan electron source can be realized. Incidentally, if the p-type semiconductor is p-Si, the electrons are emitted without emitting light since there is thermal excitation.

Incidentally, the forementioned p-type semiconductor layer preferably has a depletion layer having a width of 2.91 nm or more and 30 nm or less. In addition, this p-type semiconductor layer more preferably has a depletion layer having a width of 3.1 nm or more and 20 nm or less. Furthermore, this p-type semiconductor layer further preferably has a depletion layer having a width of 3.1 nm or more and 10 nm or less. In the embodiments, since the application as an electron source for emitting electrons is assumed instead of the application as a general semiconductor element other than the electron emission source, such a depletion layer width is preferable. Moreover, narrowing the range is to enable emission of electrons having higher current density and high energy monochromaticity.

In addition, the aforementioned electron source may further include an n-type semiconductor layer on a surface of the p-type semiconductor layer, which is opposite to a surface in contact with the graphene layer. By forming the PN junction by the N-type semiconductor layer and the P-type semiconductor layer, electrons are supplied from the n-type semiconductor layer, and electron emission is performed without irradiating light. For example, the p-type semiconductor layer is preferably thin, but has a thickness of a width of the depletion layer required for at least electron emission by a recess.

Moreover, a portion of the p-type semiconductor layer, which is opposite to a surface in contact with the graphene layer and overlaps with the electron emission area, may have a recess. When the recess is irradiated by light, electrons are emitted from the electron emission area of the graphene layer.

As described above, such a p-type semiconductor can employ various materials in accordance with the light to be irradiated, and the like. In addition, for the electron source, in addition to the aforementioned layer structure, an insulator layer (for example, $SiO_2$) that insulates the p-type semiconductor layer and the graphene is formed and a contact electrode is provided for a portion other than the electron emission area. However, as for these components, there is no problem even when materials or thickness of them are changed according to various circumstances.

Note that each numerical value contains certain errors that inevitably arise from the standard deviation observed in each measurement. Moreover, every numerical range given throughout the present specification will include each narrower numerical range, as if such narrower numerical ranges were explicitly described herein.

**Claims**

1. An electron source, comprising:

    a graphene layer having an electron emission area on a surface of the graphene layer; and
    a p-type semiconductor layer that is in direct contact with the graphene layer and forms a Schottky junction with the graphene layer.

2. The electron source as set forth in claim 1, wherein the p-type semiconductor layer has a depletion layer having a width of 2.91 nm or more and 30 nm or less.

3. The electron source as set forth in claim 1, wherein the p-type semiconductor layer has a depletion layer having a width of 3.1 nm or more and 20 nm or less.

4. The electron source as set forth in claim 1, wherein the p-type semiconductor layer has a depletion layer having a width of 3.1 nm or more and 10 nm or less.

5. The electron source as set forth in claim 1, further comprising an n-type semiconductor layer on a surface of the p-type semiconductor layer, which is opposite to a surface in contact with the graphene layer.

6. The electron source as set forth in claim 1, wherein a portion of the p-type semiconductor layer, which is opposite to a surface in contact with the graphene layer and overlaps with the electron emission area, have a recess.

1000

1500

1400

1300

1210

1100

1200

# FIG.1

FIG.2

FIG.3

FIG.4

FIG.5

FIG.6

FIG.7

FIG.8

FIG.9

FIG.10

DIGITAL MIRROR DEVICE (DMD)

PATTERNED LIGHT

OPTICAL LENS

LIGHT

100c

PATTERNED
EMISSION ELECTRONS

ELECTRON LENS

SEMICONDUCTOR
SUBSTRATE

FIG.11

# EP 4 675 667 A1

## INTERNATIONAL SEARCH REPORT

International application No.

**PCT/JP2024/007218**

### A. CLASSIFICATION OF SUBJECT MATTER

*H01J 1/308*(2006.01)i; *B82Y 30/00*(2011.01)i; *H01J 37/06*(2006.01)i; *H01J 37/073*(2006.01)i
FI:  H01J1/308; H01J37/073; H01J37/06 B; B82Y30/00

According to International Patent Classification (IPC) or to both national classification and IPC

### B. FIELDS SEARCHED

Minimum documentation searched (classification system followed by classification symbols)

H01J1/308; B82Y30/00; H01J37/06; H01J37/073

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-537288 A (KLA CORP.) 17 December 2020 (2020-12-17) paragraphs [0046]-[0061], fig. 1 | 1 |
| A | | 2-6 |
| A | JP 2020-184453 A (NATIONAL INSTITUTE OF ADVANCED INDUSTRIAL SCIENCE AND TECHNOLOGY) 12 November 2020 (2020-11-12) paragraphs [0025]-[0027], fig. 1 | 1-6 |
| A | JP 2017-045639 A (UNIV TSUKUBA) 02 March 2017 (2017-03-02) paragraph [0048], fig. 4 | 1-6 |
| A | JP 2721278 B1 (CANON KABUSHIKI KAISHA) 21 November 1997 (1997-11-21) fig. 1 | 1-6 |
| A | JP 2001-283722 A (NATIONAL INSTITUTE FOR MATERIALS SCIENCE) 12 October 2001 (2001-10-12) paragraph [0007], fig. 1 | 1-6 |

☑ Further documents are listed in the continuation of Box C.     ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **03 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/007218**

### C. DOCUMENTS CONSIDERED TO BE RELEVANT

| Category* | Citation of document, with indication, where appropriate, of the relevant passages | Relevant to claim No. |
|---|---|---|
| A | US 2013/0293100 A1 (LOS ALAMOS NATIONAL SECURITY, LLC) 07 November 2013 (2013-11-07)<br>fig. 3 | 1-6 |

Form PCT/ISA/210 (second sheet) (July 2022)

## INTERNATIONAL SEARCH REPORT
### Information on patent family members

International application No.

**PCT/JP2024/007218**

| Patent document cited in search report | | | Publication date (day/month/year) | Patent family member(s) | | | Publication date (day/month/year) |
|---|---|---|---|---|---|---|---|
| JP | 2020-537288 | A | 17 December 2020 | US | 2019/0108963 | A1 | |
| | | | | paragraphs [0053]-[0068], fig. 1 | | | |
| | | | | WO | 2019/075113 | A1 | |
| | | | | EP | 3695277 | A4 | |
| | | | | TW | 201923811 | A | |
| JP | 2020-184453 | A | 12 November 2020 | US | 2022/0216026 | A1 | |
| | | | | paragraphs [0033]-[0035], fig. 1 | | | |
| | | | | WO | 2020/225991 | A1 | |
| | | | | EP | 3968352 | A1 | |
| | | | | CN | 113795902 | A | |
| JP | 2017-045639 | A | 02 March 2017 | (Family: none) | | | |
| JP | 2721278 | B1 | 21 November 1997 | (Family: none) | | | |
| JP | 2001-283722 | A | 12 October 2001 | (Family: none) | | | |
| US | 2013/0293100 | A1 | 07 November 2013 | (Family: none) | | | |

Form PCT/ISA/210 (patent family annex) (July 2022)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010244735 A
- WO 2003162956 A
- WO 200123511 A
- WO 201745639 A

- WO H10241553 A
- WO 2721278 A
- WO H3129633 A